# EUROPÄISCHE PATENTANMELDUNG

(11) **EP 3 284 585 A1**
(43) Veröffentlichungstag der Anmeldung: **21.02.2018**
(21) Anmeldenummer: 17174889.0
(22) Anmeldetag: 08.06.2017
(51) Int. Cl.: B29D 30/66

(54) **VERFAHREN ZUM BESPIKEN EINES MIT SPIKELÖCHERN VERSEHENEN LAUFSTREIFENS EINES FAHRZEUGLUFTREIFENS MITTELS ZUMINDEST EINER SPIKESETZPISTOLE**

(30) Priorität: 16.08.2016 DE 102016215208
(71) Anmelder: Continental Reifen Deutschland GmbH, 30165 Hannover (DE)
(72) Erfinder: Rubba, Heiko, 31303 Burgdorf (DE); Kemmerling, Gerhard, 59929 Brilon (DE); Kirschning, Oliver, 30451 Hannover (DE)
(74) Vertreter: Widjaja, Wira

(57) **Zusammenfassung**

Die Erfindung betrifft ein Verfahren zum Bespiken eines mit Spikelöchern (3) versehenen Laufstreifens (4) eines Fahrzeugluftreifens (1) mittels zumindest einer Spikesetzpistole (5), bei welchem der Fahrzeugluftreifen (1) von einer Einspannvorrichtung (2) gehalten wird und die Spikesetzpistole (5) mittels eines Positioniermechanismus gegenüber den Spikelöchern (3) ausgerichtet wird, wobei das Verfahren folgende Schritte aufweist:
a. Scannen der Außenfläche des Laufstreifens (4) mittels eines eine optische 3D-Messtechnik und eine elektronische Auswerteeinheit aufweisenden Kamerasystems (6), wobei die Außenkontur des Laufstreifens (4) und Koordinaten der Positionen der Spikelöcher (3) ermittelt werden,
b. Übertragen von die Positionen der Spikelöcher sowie von die Außenkontur des Laufstreifens betreffenden Daten an den Positioniermechanismus der Spikesetzpistole (5),
c. Ausrichten der Spikesetzpistole (5) auf die Koordinaten eines Spikeloches (3) und senkrecht zur Laufstreifenaußenkontur,
d. Setzen eines Spikes in das Spikeloch (3),
e. Wiederholen der Schritte c) und d) zum Setzen weiterer Spikes (3).

## Beschreibung

Die Erfindung betrifft ein Verfahren zum Bespiken eines mit Spikelöchern versehenen Laufstreifens eines Fahrzeugluftreifens mittels zumindest einer Spikesetzpistole, bei welchem der Fahrzeugluftreifen von einer Einspannvorrichtung auf um seine Hauptachse drehbare Weise gehalten wird und die Spikesetzpistole mittels eines Positioniermechanismus gegenüber den Spikelöchern ausgerichtet wird.

Es ist bekannt, in zur Bespikeung vorgesehenen Laufstreifen von Fahrzeugluftreifen bei der Vulkanisation Spikelöcher einzuformen, welche derart ausgerichtet sind, dass die Symmetrieachse des im Wesentlichen rotationssymmetrischen Spikeloches zumindest im Wesentlichen senkrecht zur Außenkontur des Laufstreifens an der Lochposition ausgerichtet ist. Ein guter Sitz der Spikes in den Spikelöchern stellt dabei ein wichtiges Kriterium zur Erzielung der gewünschten Fahreigenschaften des Reifens, wie beispielsweise Schnee- und Eisgriff, dar. Ein schlecht sitzender Spike kann zudem eine größere Beschädigung des Straßenbelages verursachen.

Die Ausrichtung eines bereits schief in einen Laufstreifen eingesetzten Spikes kann nur mit großem Aufwand korrigiert werden. Das Entfernen eines schief eingesetzten Spikes ist ebenfalls aufwändig, wobei beim Spikeentfernen zusätzlich die Gefahr besteht, dass das Gummimaterial des Laufstreifens um das Spikeloch beschädigt wird, sodass ein erneutes Setzen eines Spikes in dieses Spikeloch nicht möglich ist. Es ist daher von besonderer Bedeutung, einen guten Spikesitz im Laufstreifen zu erzielen.

Zum Setzen von Spikes in Spikelöcher aufweisende Laufstreifen von Fahrzeugluftreifen ist es erforderlich, die Spikesetzpistole gegenüber dem jeweiligen Spikeloch auszurichten.

Hierzu ist beispielsweise ein Verfahren bekannt, bei welchem die Positionierung der Spikesetzpistole in Querrichtung des Laufstreifens entlang einer Kreisbahn erfolgt, die somit der tatsächlichen äußeren Kontur der Laufstreifenoberfläche nur angenähert ist. Dem Spikeloch wird daher in Abhängigkeit seiner axialen Position am Laufstreifen ein bestimmter Winkel zugeordnet. Bei einem weiteren bekannten Verfahren wird die Hauptachse der Spikesetzpistole in einem Winkel von +/- 6° zur radialen Richtung des Reifens auf die Spikelöcher ausgerichtet. Dieser Winkel wird als wahrscheinlicher Mittelwert angesehen, welcher die jeweilige Spikelochlage im Laufstreifen wiedergeben soll.

Bei den bekannten Verfahren zum Setzen von Spikes ist es aufgrund der mangelnden Flexibilität bezüglich der Ausrichtung der Spikesetzpistole nicht möglich, die Hauptachse der Spikesetzpistole bei sämtlichen Setzvorgängen senkrecht zur Laufstreifenoberfläche auszurichten, sodass die in die Spikelöcher gesetzten Spikes im Allgemeinen im Spikeloch nicht optimal verankert sind und die Spikepins nicht optimal gegenüber der Laufstreifenoberfläche orientiert sind. Dies ist insbesondere auch darauf zurückzuführen, dass Laufstreifenaußenkonturen im Querschnitt meist aus unterschiedlich großen Radien zusammengesetzt sind und der Reifen beim Einspannen auf der beim Setzen der Spikes verwendeten Einspannvorrichtung etwas verformt wird. Der genaue Radius der Laufstreifenaußenkontur an der Stelle der Spikelöcher ist daher nicht bekannt, sodass diese von der Spikesetzpistole nicht wie gewünscht angefahren werden können.

Der Erfindung liegt daher die Aufgabe zu Grunde, bei einem Verfahren der eingangs genannten Art ein präzises Setzen der Spikes in Laufstreifen von Fahrzeugluftreifen unterschiedlicher Dimensionen zu ermöglichen.

Die gestellte Aufgabe wird erfindungsgemäß durch ein Verfahren mit folgenden Schritten gelöst:
a) Scannen der Außenfläche des Laufstreifens mittels eines eine optische 3D-Messtechnik und eine elektronische Auswerteeinheit aufweisenden Kamerasystems, wobei die Außenkontur des Laufstreifens und die Koordinaten der Positionen der Spikelöcher ermittelt werden,
b) Übertragen von die Positionen der Spikelöcher sowie von die Außenkontur des Laufstreifens betreffenden Daten an den Positioniermechanismus der Spikesetzpistole,
c) Ausrichten der Spikesetzpistole auf die Koordinaten eines Spikeloches und senkrecht zur Laufstreifenaußenkontur,
d) Setzen eines Spikes in das Spikeloch,
e) Wiederholen der Schritte c) und d) zum Setzen weiterer Spikes.

Das erfindungsgemäße Verfahren ermöglicht es, eine Spikesetzpistole vollautomatisch sowie senkrecht zur jeweiligen Laufstreifenaußenkontur an der jeweiligen Spikesetzposition auszurichten, sodass die Hauptachse der Spikesetzpistole vor jedem Setzvorgang eines Spikes zur zentralen Achse des betreffenden Spikeloches ausgerichtet ist. Das Verfahren gemäß der Erfindung gestattet es daher, Spikes auf besonders präzise Weise in den Laufstreifen zu setzen, wodurch ein besonders fester Spikesitz in jedem Spikeloch gewährleistet ist und ein etwaiges Verkippen oder Ausbrechen der Spikes beim Fahren bestmöglich verhindert wird. Durch das individuelle Scannen des Reifens, d.h. durch das Erfassen der exakten Laufstreifenaußenkontur und der exakten Spikelochpositionen, gelingt es, mittels des erfindungsgemäßen Verfahrens Reifen unterschiedlicher Dimensionen auf besonderes rationelle Weise sowie automatisch mit Spikes zu versehen.

Bei einer bevorzugten Ausführung des Verfahrens gemäß der Erfindung basiert die optische 3D-Messtechnik des Kamerasystems auf einem Lichtschnittverfahren. Lichtschnittverfahren gestatten eine besonders genaue Ermittlung der Kontur der Außenfläche des Laufstreifens.

Bei einer möglichen Ausführungsvariante des erfindungsgemäßen Verfahrens erfolgt im Schritt a) das Scannen der Außenfläche des Laufstreifens in Umfangsabschnitten. In diesem Fall wird der von der Einspannvorrichtung gehaltene Reifen während Scanvorgang eines Umfangsabschnittes vorzugsweise nicht gedreht. Dabei kann bei dieser Alternative das Setzen der Spikes in einem gerade vermessenen Umfangsabschnitt unmittelbar nach dem Auswerten der Daten in diesem Umfangsabschnitt erfolgen.

Vorzugsweise verläuft ferner jeder dieser Umfangsabschnitte über 5% bis 15% des Laufstreifenumfanges.

Besonders vorteilhaft ist bei dieser Ausführungsvariante des erfindungsgemäßen Verfahrens, dass während des Setzens der Spikes in einem bereits gescannten Umfangsabschnitt des Laufstreifens ein an diesen Umfangsabschnitt angrenzender Umfangsabschnitt gescannt werden kann.

Bei einer weiteren erfindungsgemäßen Ausführungsvariante der Erfindung wird im Schritt a) der Laufstreifen über seinen kompletten Umfang gescannt, wobei der Scanvorgang vorzugsweise unter fortlaufender kontinuierlicher Drehbewegung des Fahrzeugluftreifens durchgeführt wird.

Für eine optimale Ausrichtung der Hauptachse der Spikesetzpistole ist es vorteilhaft, wenn gemäß der Erfindung die in Schritt a) des Verfahrens ermittelten Koordinaten der Spikelöcher den Koordinaten der Schwerpunkte bzw. Mittelpunkte der Spikelöcher an der Laufstreifenaußenfläche entsprechen.

Bei einer technisch einfachen Ausführungsform des Verfahrens gemäß der Erfindung wird im Schritt a) ein Kamerasystem verwendet, welches eine einzige Kamera aufweist. Mit dieser Kamera wird die Außenfläche des Laufstreifens gescannt und dabei werden sowohl die Laufstreifenaußenkontur als auch die Koordinaten der Positionen der Spikelöcher erfasst.

Bei einer alternativen Ausführungsform wird im Schritt a) ein Kamerasystem verwendet, welches zwei Kameras aufweist, von welchen die eine die Außenkontur des Laufstreifens erfasst und die zweite die Koordinaten der Positionen der Spikelöcher, wobei diese Kamera vorzugsweise eine Zeilenkamera ist. Eine Zeilenkamera ist besonders gut dafür geeignet, die Koordinaten der Schwerpunkte der Spikelöcher in Umfangs- und in axialer Richtung exakt zu bestimmen.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Frontansicht eines zum Bespiken positionierten Fahrzeugluftreifens und
Fig. 2 eine schematische Seitenansicht des Fahrzeugluftreifens aus Fig. 1.

Die Erfindung befasst sich mit einem Verfahren zum Bespiken von Laufstreifen von Fahrzeugluftreifen mittels einer Spikesetzpistole unter Einsatz eines Kamerasystems, welches durch Scannen die Laufstreifenaußenkontur vermisst und die Lage der Spikelöcher im Laufstreifen ermittelt.

In der Beschreibung und den Patentansprüchen umfasst der Begriff Kamerasystem eine einzige Kamera oder mehrere Kameras jeweils mit Lichtquellen sowie eine zugehörige elektronische Auswerteeinheit, die insbesondere eine datenverarbeitende Software aufweist.

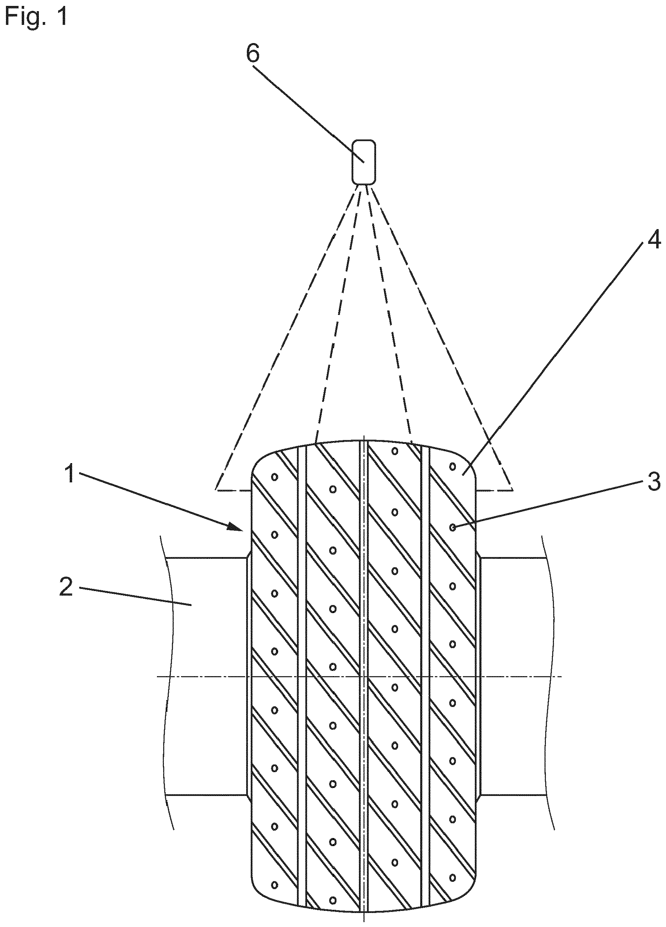

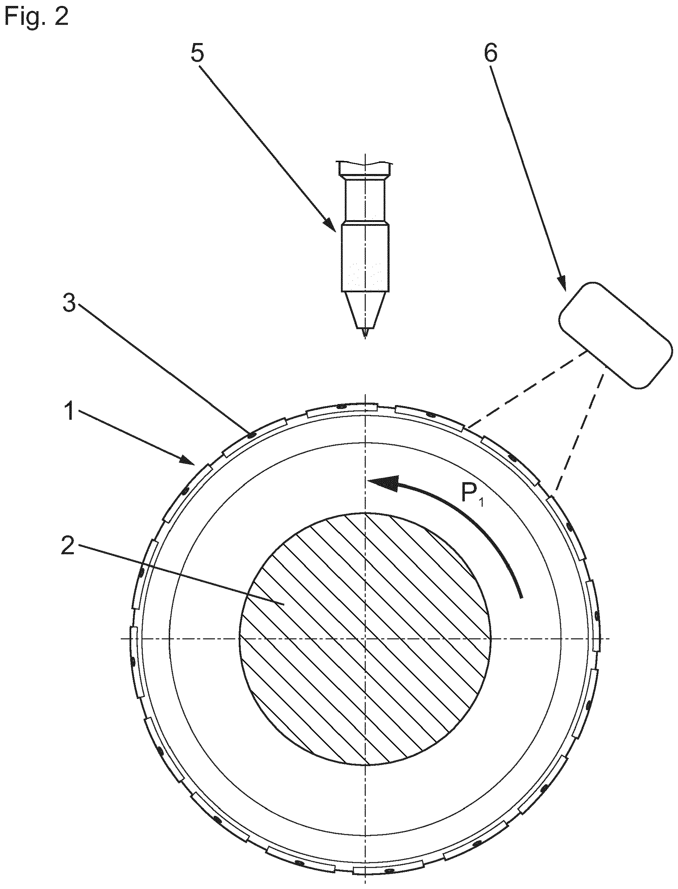

Der in Fig. 1 gezeigte Fahrzeugluftreifen 1 ist unter Innendruck stehend auf der Felge einer Einspannvorrichtung 2, deren weitere Bestandteile nicht dargestellt sind, montiert und weist einen mit Spikelöchern 3 versehenen Laufstreifen 4 auf. Jedes Spikeloch 3 erstreckt sich in an sich bekannter Weise in radialer Richtung oder zumindest im Wesentlichen in radialer Richtung in den Laufstreifen 4 hinein. Das Bespiken des Fahrzeugluftreifens 1 erfolgt mittels einer in sich bekannter Weise ausgeführten Spikesetzpistole 5, welche sich in Fig. 2 beispielhaft oberhalb des Fahrzeugluftreifens 1 befindet.

Der von der Einspannvorrichtung 2 gehaltene Fahrzeugluftreifen 1 wird in an sich bekannter Weise, beispielsweise mittels eines Servoantriebes, während eines Scanvorganges und während des Setzvorganges, wie noch beschrieben wird, gedreht. In Fig. 2 ist eine der möglichen Drehrichtungen durch den Pfeil P1 angedeutet.

Um die Spikesetzpistole 5 vor dem Setzen der Spikes optimal gegenüber dem jeweiligen Spikeloch 3 auszurichten, wird vor den Setzvorgängen die Außenfläche des Laufstreifens 4 gescannt, um die Außenkontur über den Umfang zu vermessen und Koordinaten der genauen Positionen der Spikelöcher 3 im Laufstreifen 4 zu ermitteln. Der Scanvorgang erfolgt mittels eines Kamerasystems 6, welches eine optische 3-D-Messtechnik verwendet, vorzugsweise ein Lichtschnittverfahren. Die vom Kamerasystem 6 aufgenommenen Messwerte/Daten werden mittels der Auswerteeinheit entsprechend verarbeitet.

Bei einer ersten Ausführungsvariante der Erfindung wird der Laufstreifen 4 über seinen Umfang abschnittsweise gescannt und die gescannten Laufstreifenabschnitte werden im Anschluss an die Vermessung unmittelbar mit Spikes versehen. Dabei werden in einem Umfangsabschnitt des Laufstreifens 4, welcher beispielsweise 5% bis 15% des Laufstreifenumfanges einnimmt, vom Kamerasystem 6 mehrere, beispielsweise fünf, Aufnahmen erstellt. Wird ein Lichtschnittverfahren verwendet, wird bei jeder Aufnahme eine Lichtlinie auf den Laufstreifen 4 projiziert und diese anschließend unter einem Winkel zur Projektionsrichtung vom Kamerasystem 6 aufgezeichnet. Aus dem Verlauf der Lichtlinie errechnet die Auswerteeinheit ein zweidimensionales Höhenprofil (Konturlinie eines Querschnittes durch den Laufstreifen). Es wird eine Vielzahl derartiger Höhenprofile über den Laufstreifenumfang aufgezeichnet. Aus den Höhenprofilen bzw. aus den die Höhenprofile wiedergebenden Daten wird von der Auswerteeinheit eine Außenkontur des Laufstreifens 4 errechnet, welche im Wesentlichen der tatsächlichen Außenkontur des Laufstreifens 4 entspricht.

Beim Scanvorgang detektiert das Kamerasystem 6 auch die Positionen der im Laufstreifen 4 befindlichen Spikelöcher 3, insbesondere die Raumkoordinaten des Schwerpunktes des jeweiligen Spikeloches 3. Die Genauigkeit der Ermittlung der Raumkoordinaten kann erhöht werden, wenn das Kamerasystem 6 eine Kamera zum Ermitteln der Außenkontur des Laufstreifens und eine zweite Kamera aufweist, welche vorzugsweise eine Zeilenkamera ist, die die Koordinaten der Schwerpunkte der Spikelöcher 3 in Umfangs- und in Axialrichtung besonders genau bestimmt. Die vom Kamerasystem 6 aufgenommenen Messwerte/Daten die Laufstreifenaußenkontur und die Spikelochpositionen betreffend werden mittels der Auswerteeinheit verarbeitet, sodass ein Positioniermechanismus der Spikesetzpistole 5 entsprechend gesteuert werden kann.

Zum Setzen der Spikes in die vermessenen Spikelöcher 3 wird der bereits vermessene Umfangsabschnitt des Laufstreifens 4 zur Spikesetzpistole 5 gedreht. In diesem Umfangsabschnitt wird die Spikesetzpistole 5 mittels des Positioniermechanismus auf die ermittelten Koordinaten eines Spikeloches 3 bzw. auf die Koordinaten des Schwerpunktes ausgerichtet, die Hauptachse der Spikesetzpistole 5 jeweils senkrecht auf die ermittelte Außenkontur des Laufstreifens 4. Nach erfolgter Ausrichtung der Spikesetzpistole 5 gegenüber dem Spikeloch 3 wird ein Spike in dieses Spikeloch 3 gesetzt und die Spikesetzpistole 5 wird anschließend gegenüber einem weiteren Spikeloch 3 in diesem Umfangsabschnitt des Laufstreifens 4 ausgerichtet. Dieser Vorgang wird so lange wiederholt, bis in sämtlichen Spikelöchern 3 im vermessenen Laufstreifenumfangsabschnitt Spikes eingesetzt sind. Während des Setzens der Spikes wird die Lage der Spikelöcher 3 im nächsten mit Spikes zu versehenden Laufstreifenumfangsabschnitt wie oben beschrieben ermittelt. Durch den abschnittsweisen Scanvorgang der Außenkontur des Laufstreifens 4 können Geometrieabweichungen des Laufstreifens 4 durch die Software der Auswerteeinheit berücksichtigt werden.

Der vollständig mit Spikes versehene Fahrzeugluftreifen 1 wird der Einspannvorrichtung 2 entnommen, der nächste Reifen von der Einspannvorrichtung 2 aufgenommen und dieser wie beschrieben gescannt und mit Spikes versehen.

Bei einer alternativen Ausführungsvariante der Erfindung wird der Laufstreifen 4 über seinen kompletten Umfang mittels des Kamerasystems 6 gescannt, sodass die Außenkontur des kompletten Laufstreifens 4 vermessen und die Positionen sämtlicher Spikelöcher 3 detektiert werden. Erst nach der kompletten Vermessung wird der Laufstreifen 4 über seinen gesamten Umfang mit Spikes versehen. Durch eine kontinuierliche Drehbewegung kann die Laufstreifenaußenkontur auf besonders exakte Weise mittels des Kamerasystems 6 erfasst werden, sodass auch die nachfolgenden Setzvorgänge der Spikes mit besonders hoher Präzision ausgeführt werden können.

Es ist grundsätzlich möglich, die Spikes im Laufstreifen eines Reifens mit zwei Spikesetzpistolen einzubringen.

Da jeder Reifen gemäß der Erfindung einzeln und individuell vermessen wird, können mittels des erfindungsgemäßen Verfahrens Reifen unterschiedlicher Reifendimensionen automatisch nacheinander sowie auf besonders präzise Weise mit Spikes versehen werden. Das Kamerasystem 6 kann ferner zur Qualitätskontrolle eines bereits fertig mit Spikes versehenen Reifens verwendet werden, wobei durch ein Ermitteln der Spikeüberstände der Spikesitz kontrolliert werden kann.

### Bezugsziffernliste

- 1: Fahrzeugluftreifen
- 2: Einspannvorrichtung
- 3: Spikeloch
- 4: Laufstreifen
- 5: Spikesetzpistole
- 6: Kamerasystem

## Patentansprüche

1. Verfahren zum Bespiken eines mit Spikelöchern (3) versehenen Laufstreifens (4) eines Fahrzeugluftreifens (1) mittels zumindest einer Spikesetzpistole (5), bei welchem der Fahrzeugluftreifen (1) von einer Einspannvorrichtung (2) auf um seine Hauptachse drehbare Weise gehalten wird und die Spikesetzpistole (5) mittels eines Positioniermechanismus gegenüber den Spikelöchern (3) ausgerichtet wird,
**gekennzeichnet durch**
folgende Schritte:
a. Scannen der Außenfläche des Laufstreifens (4) mittels eines eine optische 3D-Messtechnik und eine elektronische Auswerteeinheit aufweisenden Kamerasystems (6), wobei die Außenkontur des Laufstreifens (4) und Koordinaten der Positionen der Spikelöcher (3) ermittelt werden,
b. Übertragen von die Positionen der Spikelöcher sowie von die Außenkontur des Laufstreifens betreffenden Daten an den Positioniermechanismus der Spikesetzpistole (5),
c. Ausrichten der Spikesetzpistole (5) auf die Koordinaten eines Spikeloches (3) und senkrecht zur Laufstreifenaußenkontur,
d. Setzen eines Spikes in das Spikeloch (3),
e. Wiederholen der Schritte c) und d) zum Setzen weiterer Spikes (3).

2. Verfahren nach Anspruch 1, **dadurch gekennzeichnet, dass** die optische 3D-Messtechnik auf einem Lichtschnittverfahren basiert.

3. Verfahren nach Anspruch 1 oder 2, **dadurch gekennzeichnet, dass** im Schritt a) das Scannen der Außenfläche des Laufstreifens (4) in Umfangsabschnitten erfolgt.

4. Verfahren nach einem der Ansprüche 1 bis 3, **dadurch gekennzeichnet, dass** die Spikes unmittelbar nach dem Scannen und Auswerten der Daten eines Umfangsabschnittes in diesem Umfangsabschnitt gesetzt werden.

5. Verfahren nach Anspruch 3 oder 4, **dadurch gekennzeichnet, dass** jeder Umfangsabschnitt 5% bis 15% des Laufstreifenumfanges einnimmt.

6. Verfahren nach einem der Ansprüche 1 bis 5, **dadurch gekennzeichnet, dass** während des Setzens der Spikes in einem bereits gescannten Umfangsabschnitt des Laufstreifens (4) ein an diesen Umfangsabschnitt angrenzender Umfangsabschnitt gescannt wird.

7. Verfahren nach Anspruch 1 oder 2, **dadurch gekennzeichnet, dass** im Schritt a) der Laufstreifen (4) über seinen kompletten Umfang gescannt wird, wobei der Scanvorgang vorzugsweise unter fortlaufender kontinuierlicher Drehbewegung des Fahrzeugluftreifens (1) durchgeführt wird.

8. Verfahren nach einem der Ansprüche 1 bis 6, **dadurch gekennzeichnet, dass** die im Schritt a) ermittelten Koordinaten der Spikelöcher (3) den Koordinaten der Schwerpunkte bzw. Mittelpunkte der Spikelöcher (3) an der Laufstreifenaußenfläche entsprechen.

9. Verfahren nach einem der Ansprüche 1 bis 8, **dadurch gekennzeichnet, dass** im Schritt a) ein Kamerasystem verwendet wird, welches eine einzige Kamera aufweist.

10. Verfahren nach einem der Ansprüche 1 bis 8, **dadurch gekennzeichnet, dass** im Schritt a) ein Kamerasystem verwendet wird, welches zwei Kameras aufweist, von welchen die eine die Außenkontur des Laufstreifens erfasst und die zweite die Koordinaten der Positionen der Spikelöcher (3), wobei diese Kamera vorzugsweise eine Zeilenkamera ist.
